(19)

Europäisches
Patentamt
European
Patent Office
Office européen
des brevets

(11) **EP 2 597 432 A1**

(12) **EUROPEAN PATENT APPLICATION**
published in accordance with Art. 153(4) EPC

(43) Date of publication:
**29.05.2013 Bulletin 2013/22**

(51) Int Cl.:
***G01F 1/66*** (2006.01)

(21) Application number: **11809448.1**

(86) International application number:
**PCT/JP2011/004087**

(22) Date of filing: **20.07.2011**

(87) International publication number:
**WO 2012/011272 (26.01.2012 Gazette 2012/04)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.07.2010 JP 2010164557**

(71) Applicant: **Panasonic Corporation
Osaka 571-8501 (JP)**

(72) Inventors:
• **OZAKI, Yukinori
Osaka 540-6207 (JP)**
• **FUJII, Yuji
Osaka 540-6207 (JP)**
• **MIYATA, Hajime
Osaka 540-6207 (JP)**
• **NAKANO, Makoto
Osaka 540-6207 (JP)**

(74) Representative: **Schwabe - Sandmair - Marx
Patentanwälte
Stuntzstraße 16
81677 München (DE)**

(54) **CONSTRUCTION FOR MOUNTING ULTRASONIC TRANSDUCER AND ULTRASONIC FLOW METER USING SAME**

(57)     Ultrasonic transducers (6) and (7) are attached in a direction of compressing O-ring (23) provided in a housing with flow passage. Biasing means (24) makes contact with and presses these ultrasonic transducers (6) and (7) at multiple points. Screw (25) is provided for locking this pressing means (24) to the housing. This enables the use of O-ring (23) as a sealing means. Accordingly, an in-expensive ultrasonic flowmeter that facilitates signal processing by reducing propagation of vibration of the ultrasonic transducer to the housing can be achieved.

FIG. 2

EP 2 597 432 A1

## Description

### TECHNICAL FIELD

The present invention relates to ultrasonic flowmeters for measuring flow of gases and liquids by using ultrasonic waves generated by an ultrasonic transducer mounted in a housing and electrically connected to a controller.

### BACKGROUND ART

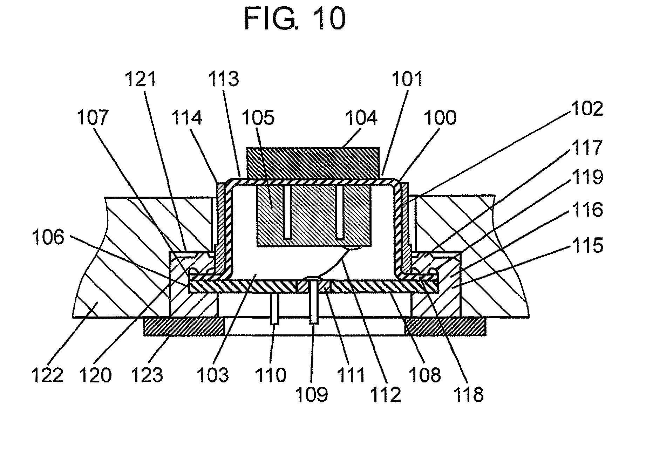

PTL 1 (Japanese Patent Unexamined Publication No. 2001-159551) discloses this type of conventional ultrasonic transducer (ultrasonic oscillator) in Fig. 10. As shown in Fig. 10, dome-shaped tubular case 100 includes top part 101, side wall 102, and opening 103. Acoustic matching layer 104 is fixed onto an outer wall of top part 101 of case 100. Piezoelectric body 105 is fixed onto an inner wall of top part 101 of case 100.

Support 106 is provided on an outer wall of side wall 102 of case 100. Support 106 increases the thickness and enhances rigidity by overlaying flange 107 annularly extending at the side of opening 103 of case 100 and sealing body 108 for covering opening 103.

Sealing body 108 has terminals 109 and 110. Terminal 109 is provided on sealing body 108 via insulator 111, and thus terminal 109 and terminal 110 are insulated. Piezoelectric body 105 and terminal 109 are electrically connected via lead wire 112.

As described above, ultrasonic oscillator 113 has piezoelectric body 105 inside dome-shaped case 100, and case 100 is sealed with sealing body 108. Acoustic matching layer 104 and support 106 are provided outside case 100.

Damper 114 formed of a material with good vibration suppression property is provided in contact with side wall 102, so as to reduce vibration of side wall 102.

Airtight sealing 119 configured with first annular protrusion 117 and second annular protrusion 118 are provided on holder 116 to configure vibration transmission suppressor 115.

Vibration transmission suppressor 115 and attachment wall 122 are hermetically sealed by firmly attaching first annular protrusion 117 to flat face 121 of attachment hole 120. In addition, vibration transmission suppressor 115 and ultrasonic oscillator 113 are airtightly sealed by firmly attaching second annular protrusion 118 to flange 107 configuring support 106 of ultrasonic oscillator 113.

Fixing body 123 is provided on attachment hole 120 created in attachment wall 122 for preventing vibration transmission suppressor 115 from dropping off from attachment hole 120. Fixing body 123 is fixed onto attachment wall 122 typically by a screw (not illustrated).

However, in the above conventional structure, the structure of vibration transmission suppressor 115 is complicated. More specifically, vibration transmission suppressor 115 has holder 116 with inner groove to which support 106 and flange 107 are mounted. Then, first annular protrusion 117 is provided near holder 116 and firmly attached to flat face 121 of attachment hole 120, so as to hermetically seal between vibration transmission suppressor 115 and attachment wall 122. Furthermore, second annular protrusion 118 is provided near holder 116 and firmly attached to flange 107 configuring support 106 of ultrasonic oscillator 113, so as to hermetically seal between vibration transmission suppressor 115 and ultrasonic oscillator 113.

Components of the conventional ultrasonic oscillator are configured in a complicated manner, and thus manufacturing cost is high.

[Citation List]

Patent Literature

PTL1 Japanese Patent Unexamined Publication No. 2001-159551

### SUMMARY OF THE INVENTION

An installation structure of an ultrasonic transducer of the present invention includes an ultrasonic transducer attached to a housing, an attachment hole of the ultrasonic transducer provided on the housing, a sealing means mounted in this attachment hole, a sealing face provided on the ultrasonic transducer and being in contact with the sealing means, a pressing means in contact with and urging the ultrasonic transducer at multiple points in a direction of compressing the sealing means, and a locking means for locking the pressing means to the housing.

This enables the use of an elastic compression member, such as a low-cost O-ring, as the sealing means. In addition, an S/N ratio can be increased at signal processing by reducing oscillatory propagation from the ultrasonic transducer to the housing. Accordingly, an ultrasonic flowmeter that enables high-precision measurement of flow volume can be achieved.

**BRIEF DESCRIPTION OF DRAWINGS**

Fig. 1 is a configuration diagram of an ultrasonic flowmeter in accordance with a first exemplary embodiment of the present invention.
Fig. 2 is a sectional view of an attachment part of an ultrasonic transducer in accordance with the first exemplary embodiment of the present invention.
Fig. 3 is a plan view of attachment of the ultrasonic transducer in accordance with the first exemplary embodiment of the present invention.
Fig. 4 is a sectional view of an attachment part of the ultrasonic transducer in accordance with a second exemplary embodiment of the present invention.
Fig. 5 is a plan view of attachment of the ultrasonic transducer in accordance with the second exemplary embodiment of the present invention.
Fig. 6 is a sectional view of an attachment part of an ultrasonic transducer in accordance with a third exemplary embodiment of the present invention.
Fig. 7 is a sectional view of an attachment part of an ultrasonic transducer in accordance with a fourth exemplary embodiment of the present invention.
Fig. 8 is a sectional view of an attachment part of an ultrasonic transducer in accordance with a fifth exemplary embodiment of the present invention.
Fig. 9 is a sectional view of an attachment part of an ultrasonic transducer in accordance with a sixth exemplary embodiment of the present invention.
Fig. 10 is a sectional view of an attachment part of a conventional ultrasonic transducer.

**DESCRIPTION OF EMBODIMENTS**

Exemplary embodiments of the present invention are described below with reference to drawings. However, a scope of the present invention is not restricted in any way by the exemplary embodiments.

(FIRST EXEMPLARY EMBODIMENT)

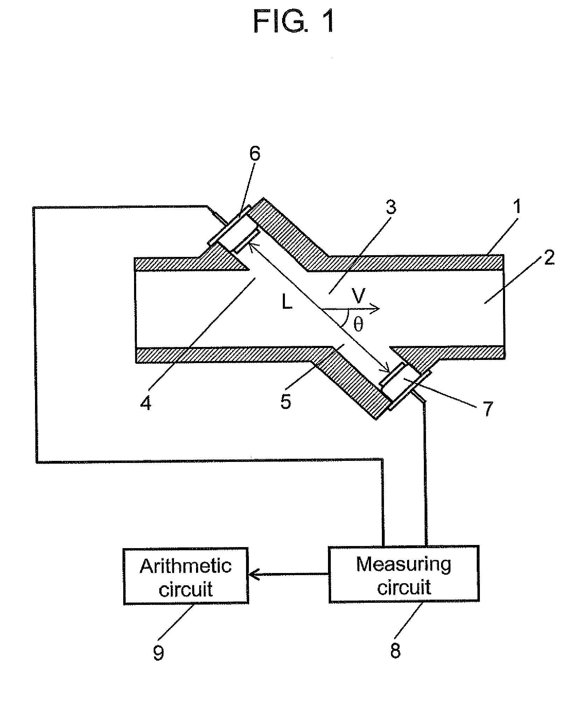

Fig. 1 illustrates configuration of an ultrasonic flowmeter employing an installation structure of an ultrasonic transducer in the first exemplary embodiment of the present invention.
In Fig. 1, fluid, such as LP gas and natural gas, passes through flow passage 2 configured in housing 1. Flow measuring part 3 is an area where a flow volume of fluid passing this flow passage 2 is measured. Ultrasonic transducer 6 is disposed in flow measuring part 3 at upstream side 4 of flow passage 2, and ultrasonic transducer 7 is disposed in flow measuring part 3 at downstream side 5 of flow passage 2.
Ultrasonic transducer 6 and ultrasonic transducer 7 are connected to measuring circuit 8 for measuring an ultrasonic propagation time between ultrasonic transducer 6 and ultrasonic transducer 7. Arithmetic circuit 9 is also provided for calculating a flow velocity and/or flow volume based on a signal from this measuring circuit 8.
A signal for emitting ultrasonic waves from ultrasonic transducers 6 and 7 is output from an oscillation circuit (not illustrated) to ultrasonic transducers 6 and 7.
Next is described the operation and effect of the ultrasonic flowmeter in flow measuring part 3 as configured above. A distance connecting the centers of ultrasonic transducer 6 and ultrasonic transducer 7 is expressed as L, and an angle between this straight line and a long-hand direction of flow passage 2, which is the flow direction, is $\theta$. A sonic velocity of fluid in flat calm is C, and a flow velocity of fluid inside flow passage 2 is V. Ultrasonic waves transmitted from ultrasonic transducer 6 disposed at upstream side 4 of flow measuring part 3 obliquely crosses flow passage 2, and ultrasonic transducer 7 disposed at downstream side 5 receives these ultrasonic waves. Propagation time t1 in this case can be defined as follows:

$$t1 = L / (C + V\cos\theta) \qquad (\text{Formula 1}).$$

Next, ultrasonic waves are transmitted from ultrasonic transducer 7 and ultrasonic transducer 6 receives these ultrasonic waves. Propagation time t2 in this case can be defined as follows:

$$t2 = L / (C\text{-}V\cos\theta) \qquad (\text{Formula } 2).$$

The following formula is obtained by eliminating sonic velocity C of fluid from Formulae for t1 and t2.

$$V = L (1 / t1 - 1 / t2) / (2 \cos\theta) \qquad (\text{Formula } 3).$$

If L and $\theta$ are given, flow velocity V can be obtained by measuring t1 and t2 using measuring circuit 8. Then, flow volume Q can be obtained by calculating Q = KSV using arithmetic circuit 9 based on this flow velocity V, whereas a section area of flow passage 2 is S, and compensation coefficient is K.

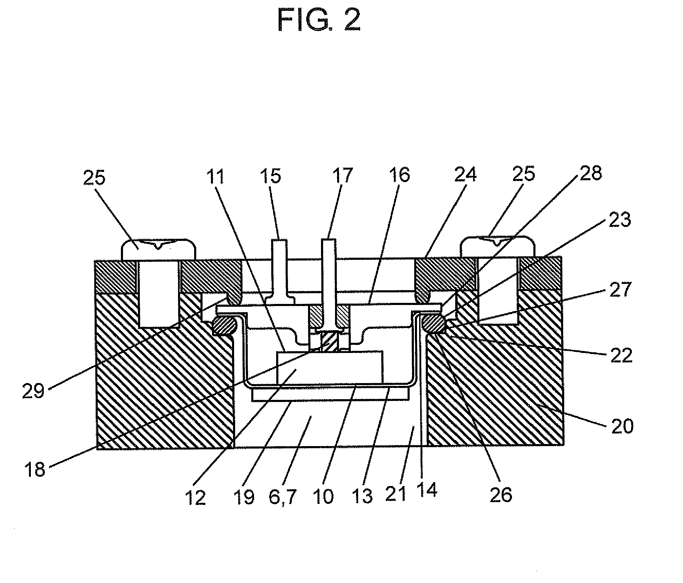

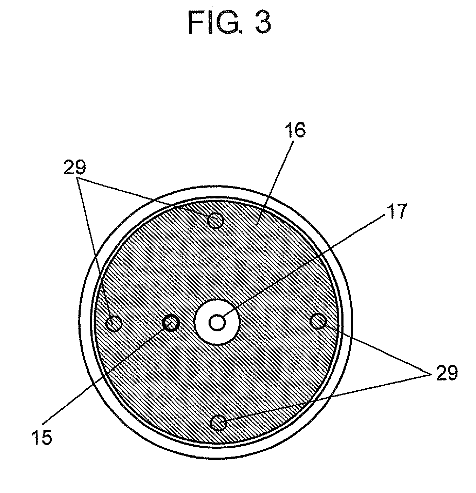

Next is described the ultrasonic transducer used in the ultrasonic flowmeter for measuring the flow volume based on the above operating principle with reference to Fig. 1 to Fig. 9. Fig. 2 is a sectional view of attachment of the ultrasonic transducer in the first exemplary embodiment of the present invention. Fig. 3 is a plan view of attachment of the ultrasonic transducer in the first exemplary embodiment of the present invention.

In Fig. 1, ultrasonic transducers 6 and 7 disposed at upstream side 4 and downstream side 5 include piezoelectric body 12 with one electrode face 10 and the other electrode face 11 facing each other, and case 13 electrically connected to one electrode face 10 of piezoelectric body 12, as shown in Fig. 2 and Fig. 3.

Ultrasonic transducers 6 and 7 also include terminal plate 16 with one external electrode 15 electrically connected to flange 14 of case 13, and the other external electrode 17 provided on terminal plate 16 in a state insulated from terminal plate 16.

Furthermore, ultrasonic transducers 6 and 7 include conductor 18 provided between electrode face 11 of piezoelectric body 12 and external electrode 17, and acoustic matching layer 19 bonded onto case 13 in a state facing piezoelectric body 12.

O-ring 23 is inserted and attached to step 22 in attachment hole 21 formed in housing 20. Flange 14 of ultrasonic transducers 6 and 7 disposed in attachment hole 21 makes contact with O-ring 23. Flange 14 is pressed to the side of O-ring 23 by pressing means 24 fixed onto housing 20 by screw 25, which is a locking means. In this way, ultrasonic transducers 6 and 7 are fixed onto housing 20 by sandwiching flange 14 between O-ring 23 and pressing means 24.

Horizontal face 26 and vertical face 27 of step 22 of housing 20 where O-ring 23 is set configure a sealing face against O-ring 23. A diameter of vertical face 27 is set larger than a diameter of periphery 28 of terminal plate 16. Therefore, periphery 28 of terminal plate 16 does not make contact with vertical face 27 even if O-ring 23 is compressed.

Protrusion 29 with round tip is formed on pressing means 24 at four points.

The installation structure and operation of the ultrasonic transducer as configured above are described below.

First, O-ring 23 is inserted and attached to step 22 formed in housing 20. Next, flange 14 of each of ultrasonic transducers 6 and 7 is placed on O-ring 23, and pressing means 24 is fixed with screw 25. As a result, ultrasonic transducers 6 and 7 are fixed onto housing 20 in a state that O-ring 23 is compressed.

In the fixed state, periphery 28 of terminal plate 16 and housing 20 are in the non-contact state. Ultrasonic transducer 6 and ultrasonic transducer 7 fixed in this way mutually transmit ultrasonic waves. The flow volume can thus be obtained by measuring the ultrasonic propagation time between ultrasonic transducer 6 and ultrasonic transducer 7.

In this exemplary embodiment, vibration of the ultrasonic transducer propagates to the housing via an elastic body of O-ring, which is the sealing means. Propagation to the housing is thus reduced. In addition, the ultrasonic transducer is pressed only at multiple points in a direction of compressing the sealing means. This reduces propagation to the housing, compared to a structure of urging the ultrasonic transducer over the entire face.

Accordingly, an S/N ratio at signal processing can be increased by reducing propagation of the ultrasonic transducer to the housing. The present invention thus achieves the ultrasonic transducer and ultrasonic flowmeter that enables high-precision measurement of the flow volume. Protrusion 29 does not need to be provided at four points. Terminal plate 16 can be evenly pressed if protrusion 29 is provided at three points, and there is thus no problem from a functional standpoint.

(SECOND EXEMPLARY EMBODIMENT)

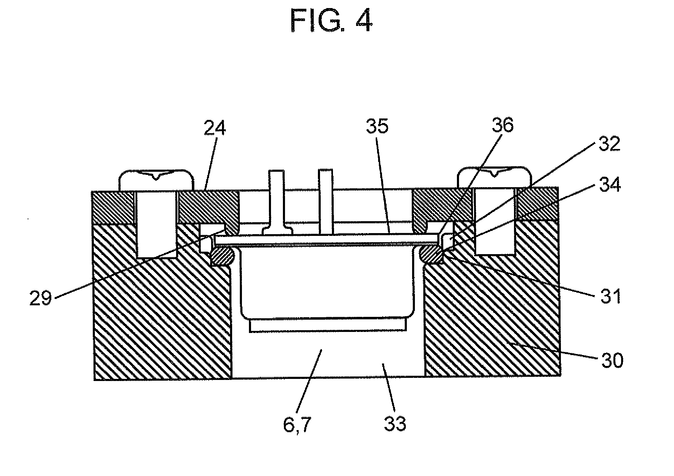

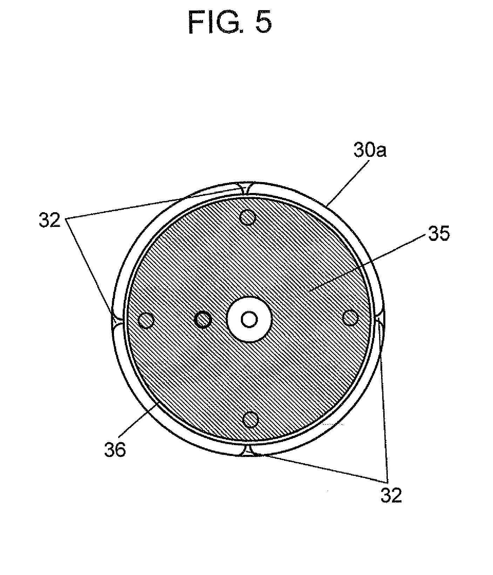

Fig. 4 and Fig. 5 show a second exemplary embodiment of the present invention. Fig. 4 is a sectional view of attachment of an ultrasonic transducer, and Fig. 5 is a plan view of attachment of the ultrasonic transducer.

In Fig. 4, projection 32 is provided as a contact-restricting means at four points on a top part of step 31 of housing 30. These projections 32 prevent periphery 36 of terminal plate 35 from being in contact with side wall 30a of housing 30 when ultrasonic transducers 6 and 7 are mounted on O-ring 34 in attachment hole 33. Projection 32 has a shape that it makes linear-contact in the vertical direction with periphery 36 of terminal plate 35. Other structure and assembly method are the same as that shown in Fig. 2, and thus their description is omitted.

In this exemplary embodiment, periphery 36 of terminal plate 35 linearly contacts with projection 32 even if ultrasonic transducers 6 and 7 horizontally move when protrusions 29 of pressing means 24 press ultrasonic transducers 6 and 7. Accordingly, ultrasonic transducers 6 and 7 do not directly make contact with housing 30. Propagation of vibration of ultrasonic transducers 6 and 7 to housing 30 thus reduces.

Accordingly, an S/N ratio at signal processing can be increased by reducing propagation from the ultrasonic transducer to housing 30. The present invention thus achieves ultrasonic transducers 6 and 7 and ultrasonic flowmeter that enable high-precision measurement of the flow volume. The shape of projection 32 is not limited to linear-contact in the vertical direction. Point-contact with periphery 36 of terminal plate 35 also ensures performance and achieves great effect.

In addition, projection 32 does not need to be provided at four points. Contact of periphery 36 of terminal plate 35 with side wall 30a can be prevented by providing projection 32 at three points, even if ultrasonic transducers 6 and 7 horizontally move in attachment hole 33.

(THIRD EXEMPLARY EMBODIMENT)

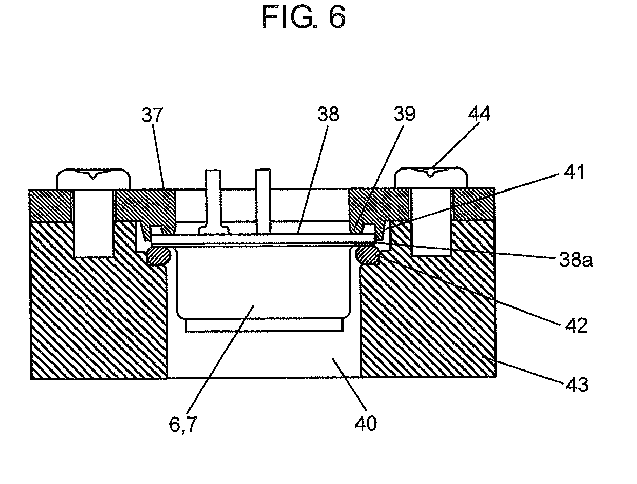

Fig. 6 is a third exemplary embodiment of the present invention. Fig. 6 is a sectional view of attachment of an ultrasonic transducer. In Fig. 6, pressing means 37 includes protrusion 39 for being in contact with and urging terminal plate 38 of ultrasonic transducers 6 and 7 at three or more points, and support 41 for supporting ultrasonic transducers 6 and 7 toward the center of attachment hole 40 by being in contact with periphery 38a of terminal plate 8 at three or more points. Other structure and assembly method of other components including O-ring 42, housing 43, and screw 44 that is a locking means are the same as that in Fig. 2, and thus their description is omitted.

In this exemplary embodiment, periphery 38a of terminal plate 38 makes contact with support 41 when protrusion 39 of pressing means 37 presses ultrasonic transducers 6 and 7, and thus ultrasonic transducers 6 and 7 are prevented from moving horizontally. Accordingly, vibration of ultrasonic transducers 6 and 7 does not directly propagate to housing 30, and propagates to the housing only via pressing means 37.

As a result, an S/N ratio at signal processing can be increased by reducing propagation from ultrasonic transducers 6 and 7 to the housing. Accordingly, the present invention achieves an ultrasonic transducer and ultrasonic flowmeter that enables high-precision measurement of the flow volume.

(FOURTH EXEMPLARY EMBODIMENT)

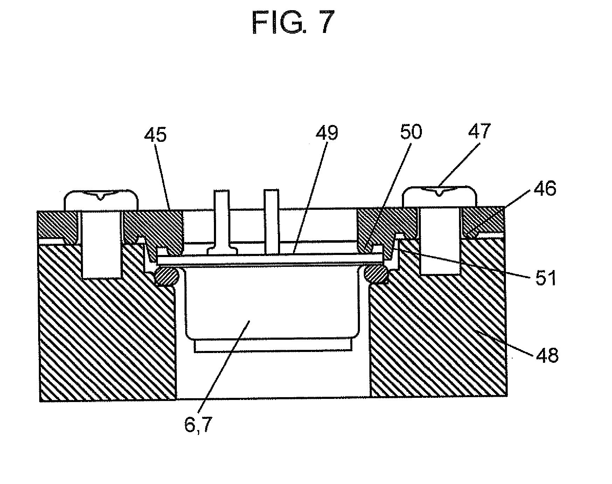

Fig. 7 is a fourth exemplary embodiment of the present invention. Fig. 7 is a sectional view of attachment of an ultrasonic transducer.

In Fig. 7, pressing means 45 has protrusion 46 that makes contact with housing 48 when pressing means 45 is fixed onto housing 48 with screw 47, which is a locking means. This protrusion 46 preferably makes contact with housing 48 at three or more points. Biasing means 45 includes protrusion 50 for urging terminal plate 49 and support 51 for supporting terminal plate 49. Other structure and assembly method are the same as that in Fig. 6, and their description is thus omitted.

In this exemplary embodiment, pressing means 45 is fixed onto housing 48 with screw 47 at fixing ultrasonic transducers 6 and 7. Protrusion 50 presses terminal plate 49. At this point, protrusion 46 of pressing means 45 makes contact with housing 48 in a point-contact state. Accordingly, vibration of ultrasonic transducers 6 and 7 does not directly propagate to housing 48, and only propagates to housing 48 via protrusion 46 of pressing means 45.

As a result, an S/N ratio at signal processing can be increased by reducing propagation from ultrasonic transducers 6 and 7 to the housing. Accordingly, the present invention achieves an ultrasonic transducer and ultrasonic flowmeter that enables high-precision measurement of the flow volume are achieved. The present invention is not limited to the structure of providing protrusion 46 on pressing means 45. The same effect is achievable when protrusion 46 is provided on housing 48.

(FIFTH EXEMPLARY EMBODIMENT)

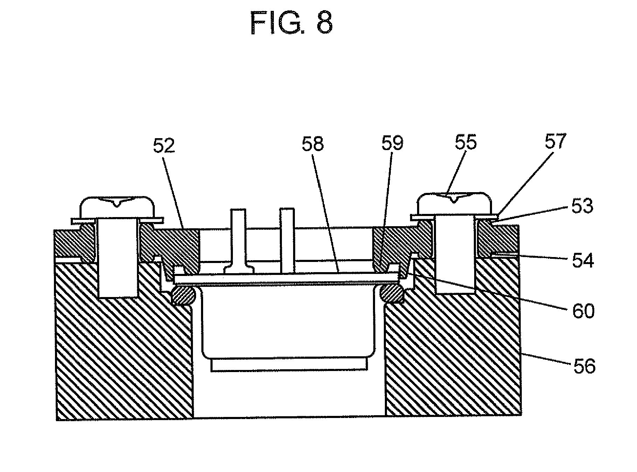

Fig. 8 is a fifth exemplary embodiment of the present invention. Fig. 8 is a sectional view of attachment of ultrasonic transducer.

In Fig. 8, upper protrusion 53 and lower protrusion 54 are provided on pressing means 52. Rubber sheet 57, which is a vibration absorber, is placed between screw 55 and upper protrusion 53. When pressing means 52 is fixed onto housing 56 with screw 55, which is a locking means, lower protrusion 54 makes point-contact with housing 56. This lower protrusion 54 makes contact with housing 56 preferably at three or more points. On the other hand, upper protrusion 53 makes contact with rubber sheet 57. Biasing means 52 includes protrusion 59 for urging terminal plate 58 and support 60 for supporting terminal plate 58. Other structure and assembly method are the same as that in Fig. 6, and thus their description is omitted.

In this exemplary embodiment, pressing means 52 is fixed onto housing 56 with screw 55 at fixing ultrasonic transducers 6 and 7. Protrusion 59 presses terminal plate 58. At this point, lower protrusion 54 of pressing means 52 makes contact with housing 56 in a point-contact state. Upper protrusion 53 makes contact with screw 55 via rubber sheet 57, which is the vibration absorber. Accordingly, vibration of ultrasonic transducers 6 and 7 does not directly propagate to housing 56, and propagates to the housing only via lower protrusion 54 and upper protrusion 53 of pressing means 52. In particular, rubber sheet 57, which is the vibration absorber, is placed between upper protrusion 53 and screw 55. This prevents propagation of vibration to housing 56 via screw 55.

As a result, an S/N ratio at signal processing can be increased by reducing propagation from ultrasonic transducers 6 and 7 to the housing. Accordingly, the present invention achieves an ultrasonic transducer and ultrasonic flowmeter that enable high-precision measurement of the flow volume.


(SIXTH EXEMPLARY EMBODIMENT)

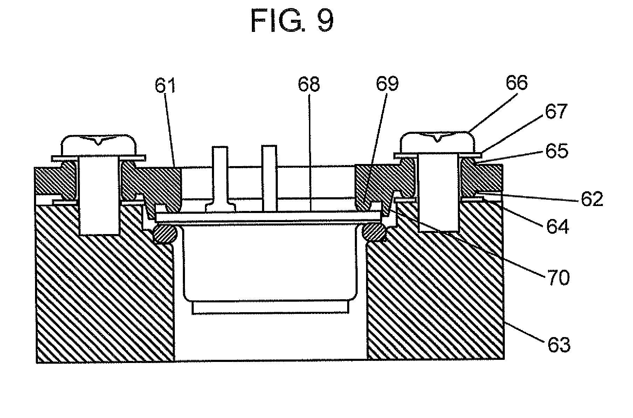

Fig. 9 is a sixth exemplary embodiment of the present invention. Fig. 9 is a sectional view of attachment of an ultrasonic transducer.

In Fig. 9, rubber sheet 64, which is a vibration preventing means, is placed between lower protrusion 62 of pressing means 61 and housing 63. Rubber sheet 67, which is the vibration absorber, is placed between upper protrusion 65 of pressing means 61 and screw 66, which is a locking means. Biasing means 61 includes protrusion 69 for urging terminal plate 68 and support 70 for supporting terminal plate 68. Other structure and assembly method are the same as that in Fig. 6, and thus their description is omitted.

In this exemplary embodiment, pressing means 61 is fixed onto housing 63 with screw 66 at fixing ultrasonic transducers 6 and 7. Protrusion 69 presses terminal plate 68. At this point, lower protrusion 62 of pressing means 61 is fixed onto housing 63 with rubber sheet 64 in between. Upper protrusion makes contact with screw 66 via rubber sheet 67, which is a vibration absorber. Accordingly, vibration of ultrasonic transducers 6 and 7 does not directly propagate to housing 63. Vibration of ultrasonic transducers 6 and 7 propagates to the housing only via rubber sheets 64 and 67.

As a result, an S/N ratio at signal processing can be increased by reducing propagation from ultrasonic transducers 6 and 7 to the housing. Accordingly, the present invention achieves an ultrasonic transducer and ultrasonic flowmeter that enable high-precision measurement of the flow volume.

As described above, the present invention includes the housing, the ultrasonic transducer attached to the housing, the attachment hole of the ultrasonic transducer provided on the housing, the sealing means mounted in the attachment hole, the sealing face provided on the ultrasonic transducer for being in contact with the sealing means, the pressing means in contact with and urging the ultrasonic transducer at multiple points in a direction of compressing the sealing means, and the locking means for locking the pressing means to the housing.

As a result, vibration of the ultrasonic transducer propagates to the housing via an elastic body, such as the O-ring, that is the sealing means and thus propagation to the housing is reduced. In addition, the ultrasonic transducer makes contact and is pressed in the direction of compressing the sealing means. This structure can reduce propagation to the housing compared to the structure of urging the ultrasonic transducer over the entire face.

Accordingly, an S/N ratio at signal processing can be increased by reducing propagation from ultrasonic transducers 6 and 7 to the housing. Accordingly, the present invention achieves an ultrasonic transducer and ultrasonic flowmeter that enable high-precision measurement of the flow volume.

Still more, the ultrasonic transducer of the present invention includes the piezoelectric body with a pair of opposing electrode faces; the case electrically connected to one of the electrode faces of the piezoelectric body; the terminal plate electrically connected to the flange of the case; the external electrode provided on the terminal plate in a state insulated from the terminal plate, the conductor provided between the other one of the electrode faces of the piezoelectric body and the external electrode; and the acoustic matching layer bonded to the case in a state facing the piezoelectric body. The sealing means is provided in contact with the flange and the housing. The pressing means makes contact with and presses the terminal plate at three or more points in the direction of compressing the sealing means.

As a result, vibration of the piezoelectric body propagates to the housing via the case and the elastic body, such as the O-ring, that is the sealing means when the piezoelectric body bonded to the case vibrates and ultrasonic waves are generated from the acoustic matching layer bonded to the case in a state facing the piezoelectric body. The vibration-absorbing effect of the elastic body reduces propagation to the housing. Propagation to the housing is also reduced by making the pressing means contact with and press the terminal plate at three or more points. In this case, vibration propagates to the housing only via multiple pressing means, compared to the structure of pressing the terminal plate of the ultrasonic transducer over the entire face.

Accordingly, an S/N ratio at signal processing can be increased by reducing propagation from ultrasonic transducers 6 and 7 to the housing. Accordingly, the present invention achieves an ultrasonic transducer and ultrasonic flowmeter that enable high-precision measurement of the flow volume.

Still more, the present invention includes the contact-restricting means for making the periphery of the terminal plate contact with the attachment hole in the state of point-contact or linear-contact.

As a result, the periphery of the terminal plate does not make planar-contact with the housing, and thus propagation of vibration of the ultrasonic transducer to the housing can be reduced. Accordingly, the present invention achieves an ultrasonic transducer and ultrasonic flowmeter that enable high-precision measurement of the flow volume.

Still more, in the present invention, the contact-restricting means has contact parts provided in the attachment hole to make the periphery of the terminal plate contact in the attachment hole at three or more points.

As a result, the periphery of the terminal plate and the housing can be fixed at an equal distance, and thus ultrasonic waves are emitted in uniform distribution from the attachment hole of the ultrasonic transducer. Accordingly, the present invention achieves stable signal processing and thus offers an ultrasonic transducer and ultrasonic flowmeter that enables high-precision measurement of the flow volume.

Still more, in the present invention, the pressing means includes the protrusion for being in contact with and urging the terminal plate at three or more points, and the support for supporting the ultrasonic transducer toward the center of the attachment hole by being in contact with the periphery of the terminal plate at three or more points.

As a result, the periphery of the terminal plate of the ultrasonic transducer does not directly contact with the housing by fixing the pressing means to the housing. The periphery of the terminal plate and the housing can be fixed at an equal distance, and thus ultrasonic waves are emitted in uniform distribution from the attachment hole of the ultrasonic transducer. Accordingly, the present invention achieves stable signal processing and thus offers an ultrasonic transducer and ultrasonic flowmeter that enables high-precision measurement of the flow volume.

Still more, in the present invention, the pressing means or the housing includes the protrusion at three or more points in contact parts where the pressing means makes contact with the housing.

As a result, propagation from the pressing means to the housing can be reduced by fixing the pressing means to the housing. Accordingly, the present invention achieves stable signal processing and thus offers an ultrasonic transducer and ultrasonic flowmeter that enables high-precision measurement of the flow volume.

Still more, the present invention includes the vibration absorber between the locking means and the pressing means and/or between the pressing means and the housing.

As a result, propagation from the ultrasonic transducer to the housing via the pressing means can be reduced. Accordingly, the present invention achieves stable signal processing and thus offers an ultrasonic transducer and ultrasonic flowmeter that enables high-precision measurement of the flow volume.

Furthermore, in the present invention, the housing includes a flow measuring part for measuring a flow volume of target fluid. An ultrasonic flowmeter is equipped with the flow measuring part that includes a pair of ultrasonic transducers attached using the installation structure of the ultrasonic transducer as described above, a measuring circuit for measuring the ultrasonic propagation time between the ultrasonic transducers, and an arithmetic circuit for obtaining the flow volume based on a signal from this measuring circuit. Accordingly, a highly reliable measuring accuracy is achieved.

(INDUSTRIAL APPLICABILITY)

As described above, the ultrasonic transducer and the ultrasonic flowmeter of the present invention can electrically connect the ultrasonic transducer and a control PC-board without using a lead wire in the manufacture of the ultrasonic flowmeter. This achieves an inexpensive ultrasonic flowmeter. In addition, since the lead wire is not used, an influence of external noise is eliminated. The present invention thus offers an ultrasonic flowmeter equipped with a highly-reliable ultrasonic transducer.

**REFERENCE MARKS IN THE DRAWINGS**

    1, 20, 30, 43, 48, 56, 63 Housing
    2 Flow passage (measurement flow passage)
    6, 7 Ultrasonic transducer
    14 Sealing face (flange)
    23, 34, 42 O-ring (Sealing means)
    24, 37, 45, 52, 61 Pressing means

25, 44, 47, 55, 66 Screw (Locking means)

**Claims**

1.  An installation structure of an ultrasonic transducer, comprising:

    a housing;
    the ultrasonic transducer attached to the housing;
    an attachment hole of the ultrasonic transducer created in the housing;
    a sealing means mounted in the attachment hole;
    a sealing face provided on the ultrasonic transducer and in contact with the sealing means;
    a pressing means in contact with the ultrasonic transducer at a plurality of points, and urging the ultrasonic transducer in a direction of compressing the sealing means; and
    a locking means for locking the pressing means to the housing.

2.  The installation structure of the ultrasonic transducer of claim 1, the ultrasonic transducer comprising:

    a piezoelectric body with a pair of opposing electrode faces; a case electrically connected to one of the electrode faces of the piezoelectric body; a terminal plate electrically connected to a flange of the case; an external electrode provided on the terminal plate in a state insulated from the terminal plate, a conductor provided between the other one of the electrode faces of the piezoelectric body and the external electrode; and an acoustic matching layer bonded to the case in a state facing the piezoelectric body,
    wherein
    the sealing means is provided in contact with the flange and the housing, and
    the pressing means is in contact with the terminal plate at not less than three points and urging the terminal plate in a direction of compressing the sealing means.

3.  The installation structure of the ultrasonic transducer of claim 2, comprising a contact-restricting means for keeping the periphery of the terminal plate in any of a point-contact and linear-contact to the attachment hole.

4.  The installation structure of the ultrasonic transducer of claim 3, wherein the contact-restricting means is configured by providing contact parts in the attachment hole, the contact parts keeping the periphery of the terminal plate contact against the attachment hole at not less than three points.

5.  The installation structure of the ultrasonic transducer of claim 2, wherein the pressing means includes protrusions in contact with and urging the terminal plate at not less than three points in the direction of compressing the sealing means, and supports for supporting the ultrasonic transducer toward the center of the attachment hole by being in contact with the periphery of the terminal plate at not less than three points.

6.  The installation structure of the ultrasonic transducer of one of claims 1 and 2, wherein a protrusion is provided at not less than three points on one of the pressing means and the housing in a contact part where the pressing means and the housing make contact.

7.  The installation structure of an ultrasonic transducer of one of claims 1 and 2 further comprising a vibration absorber placed in at least one of between the locking means and the pressing means and between the pressing means and the housing.

8.  An ultrasonic flowmeter comprising: a flow-measurement part provided in a housing for measuring a flow volume of a target fluid, the flow-measurement part including a pair of ultrasonic transducers installed using the installation structure of the ultrasonic transducer of one of claims 1 and 2; a measuring circuit for measuring an ultrasonic propagation time between the ultrasonic transducers; and an arithmetic circuit for calculating the flow volume based on a signal from the measuring circuit.

# FIG. 1

# FIG. 2

FIG. 3

# FIG. 4

FIG. 5

# FIG. 6

# FIG. 7

EP 2 597 432 A1

FIG. 8

16

# FIG. 9

# FIG. 10

<div align="center">

**INTERNATIONAL SEARCH REPORT**

</div>

| | International application No. |
|---|---|
| | PCT/JP2011/004087 |

**A. CLASSIFICATION OF SUBJECT MATTER**
*G01F1/66*(2006.01)i

According to International Patent Classification (IPC) or to both national classification and IPC

**B. FIELDS SEARCHED**

Minimum documentation searched (classification system followed by classification symbols)
G01F1/66

Documentation searched other than minimum documentation to the extent that such documents are included in the fields searched

| Jitsuyo Shinan Koho | 1922–1996 | Jitsuyo Shinan Toroku Koho | 1996–2011 |
|---|---|---|---|
| Kokai Jitsuyo Shinan Koho | 1971–2011 | Toroku Jitsuyo Shinan Koho | 1994–2011 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2005-189090 A (Aichi Tokei Denki Co., Ltd.), 14 July 2005 (14.07.2005), paragraphs [0030], [0031]; fig. 7, 8 (Family: none) | 1-8 |
| Y | JP 2004-125443 A (Aichi Tokei Denki Co., Ltd.), 22 April 2004 (22.04.2004), paragraphs [0047] to [0054]; fig. 9 to 13 (Family: none) | 1-8 |
| Y | JP 2004-198282 A (Matsushita Electric Industrial Co., Ltd.), 15 July 2004 (15.07.2004), entire text; all drawings (Family: none) | 2-8 |

☒ Further documents are listed in the continuation of Box C. ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 09 August, 2011 (09.08.11) | 16 August, 2011 (16.08.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2011/004087

| C (Continuation). DOCUMENTS CONSIDERED TO BE RELEVANT | | |
|---|---|---|
| Category* | Citation of document, with indication, where appropriate, of the relevant passages | Relevant to claim No. |
| A | JP 2007-139610 A (Ricoh Elemex Corp.),<br>07 June 2007 (07.06.2007),<br>paragraphs [0025] to [0034]; fig. 4, 5<br>(Family: none) | 1-8 |
| A | JP 2007-208381 A (Matsushita Electric<br>Industrial Co., Ltd.),<br>16 August 2007 (16.08.2007),<br>entire text; all drawings<br>(Family: none) | 1-8 |
| A | JP 2008-2879 A (Yazaki Corp.),<br>10 January 2008 (10.01.2008),<br>entire text; all drawings<br>(Family: none) | 1-8 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001159551 A